# EUROPEAN PATENT APPLICATION

(11) **EP 4 174 844 A1**
(43) Date of publication of application: **03.05.2023**
(21) Application number: 22204181.6
(22) Date of filing: 27.10.2022
(51) Int. Cl.: G10K 11/178

(54) **APPARATUS FOR REDUCING NOISE GENERATED BY AN AIR MOVING OR AIR CONDITIONING DEVICE AND VEHICLE COMPRISING SUCH AN APPARATUS**

(30) Priority: 28.10.2021 IT 202100027719
(71) Applicant: Ask Industries Societa' per Azioni, 60037 Monte San Vito (AN) (IT)
(72) Inventor: CATTANI, Luca, 42019 SCANDIANO (IT); CINANNI, Dario, 60019 SENIGALLIA (IT); COSTALUNGA, Alessandro, 46019 VIADANA (IT); EBRI, Lorenzo, 42123 PARMA (IT); MANGHI, Filippo, 42049 San Ilario d Enza (IT); MASSINI, Pietro, 60129 ANCONA (IT); VIOLI, Francesco, 42049 Sant Ilario d Enza (IT)
(74) Representative: Lavoix

(57) **Abstract**

Apparatus (100) for reducing noise generated by an air moving or air conditioning device, characterised in that it comprises at least:
- one duct (1) having a first end (3) operatively connected to a section (112) of the device (110) from which air streams (F_{A}) to be circulated come from;
- an electronic control unit (15);
- at least one noise sensor (10) that is arranged along the duct (1) and is configured to detect noise due to air streams (F_{A}) injected within the duct (1) and provide in input to said electronic control unit (15) one or more signals (S_{R}) indicative of a first noise level detected at a first position along the duct (1);
- at least one sound source (20) positioned along the conduit (1) spaced [sic] from said at least one noise sensor (10);
- and at least one further noise sensor (30) placed along the duct (1) downstream of the at least one noise sensor (10) with respect to the direction of said air flows (F_{A}), said further noise sensor (30) being configured to detect the level of residual noise present in the duct (1) at a second position and send to the electronic control unit (15) one or more corresponding signals (S_{RES}) indicative of the level of residual noise detected. The electronic control unit (15) is configured to generate, based on the signals (S_{R}) indicative of the first noise level detected by said at least one noise sensor (10) and said one or more corresponding signals (S_{RES}) indicative of the level of residual noise detected by the further noise sensor (30), one or more command signals (Sc) suitable for driving said at least one sound source (20) so as to emit sound waves within the duct (1) suitable for reducing, at least partially, the level of residual noise detected.

## Description

The present invention relates to an apparatus for reducing the noise generated by air moving or air conditioning devices and to a vehicle comprising such an apparatus.

The definition of 'air moving or air conditioning device' should be understood herein to comprise both devices intended for simply moving air, e.g. fans for industrial or civil use suited to force air circulation, as well as devices suitable for changing its temperature or humidity, typically air conditioning systems.

The apparatus according to the invention is especially suited for reducing the noise generated by heating, ventilation, and air-conditioning systems installed on board vehicles, commonly known as 'HVAC systems', and will be described herein by making reference to said application without intending to limit its possible applications, in particular in the automotive field, e.g. in buses, lorries, commercial vehicles, as well as other types of vehicles outside of the automotive field, e.g. boats, trains, aeroplanes, etc., or in any application for industrial or civil use in which air conditioning or simple air moving devices are used.

As is known, HVAC systems have long been widely used in various sectors.

For example, their use on board motor vehicles allows for adequate passenger comfort in various climatic conditions.

Among others, such systems have reached high levels of quality, and are able, e.g., to independently condition both the front and rear areas of a passenger compartment, thus making it possible to selectively regulate the flow and characteristics of air, e.g. temperature, even on a seat-by-seat basis.

Along with these benefits, such HVAC systems are a source of noise that may be annoying, in particular taking into account the limited space in the passenger compartment in which the treated air is circulated.

Clearly, devices for simply moving air may also be a source of annoying noise.

The objective of this invention is to address such shortcomings, in particular to propose a solution allowing for the reduction of the noise generally produced by air moving or air conditioning devices, in particular by HVAC systems on board of vehicles, so as to further increase in general user comfort, and that of passengers on board a vehicle in particular.

This objective, and others that may arise from the following description, is achieved by an apparatus for reducing the noise generated by an air moving or air conditioning device, in particular by an HVAC system of a vehicle, more specifically that of a motor vehicle, the characteristics of which are set forth in claim 1.

This objective is further achieved by a vehicle, in particular an automobile, comprising an HVAC conditioning system for circulating flows of conditioned air within the vehicle, characterised in that it comprises at least one apparatus for reducing the noise produced by such an HVAC system as defined in the claims appended hereto.

Particular embodiments are object of the dependent claims and are intended as integral part of the present description.

Other characteristics and advantages of the invention will become apparent from the following detailed description, which is provided by way of example only and without limitation, by reference to the attached drawings, where:
Fig. 1 and 2 are two different perspective views, represented by a partial lateral cross-section and a transversal cross-section views, respectively, showing one possible embodiment of some components of the apparatus according to the invention, as applied to a conduit of an HVAC system;
Fig. 3 is a perspective section view of some possible configurations of the apparatus according to the invention;
Fig. 4 - 7 schematically illustrate various possible configurations and embodiments of noise sensors that can be used in the apparatus according to the invention.

It should be noted that, in the following detailed description, components that are identical or similar from a structural and/or functional standpoint may have the same or different reference numbers, independently of whether they are shown in different embodiments of this invention or in different parts.

It should further be noted that, in order to provide a clear and concise description of this invention, the designs may not be to scale, and some characteristics of the description may be shown schematically.

Moreover, within the meaning hereof, the terms 'adapted', 'organised', 'configured', or 'shaped', or the like, in reference to any component as a whole or any part of a component or combination of components shall be understood accordingly to mean and include the structure and/or configuration and/or positioning.

Moreover, the use of the terms 'substantial' or 'substantially' herein shall be understood to include a variation of 5 % more or less relative to the value, position, or reference axis indicated, and the use of the terms 'transverse' or 'transversely' shall be understood to include a direction not parallel to the part(s) or direction(s)/axis (axes) referred to, and a perpendicular direction shall be deemed a specific case of a transverse direction.

Lastly, in the description and the following claims, the ordinal numbers 'first', 'second', etc. will be used for clarity, and are not in any way to be understood as limitations of any kind; in particular, the reference, e.g., to a 'first sensor' does not necessarily imply the presence or the strict requirement of an additional 'second sensor', or vice versa, unless the presence thereof is clearly required for the proper functioning of the embodiments described, nor does it imply that the order must be exactly that of the sequence described by reference to the exemplary embodiments described.

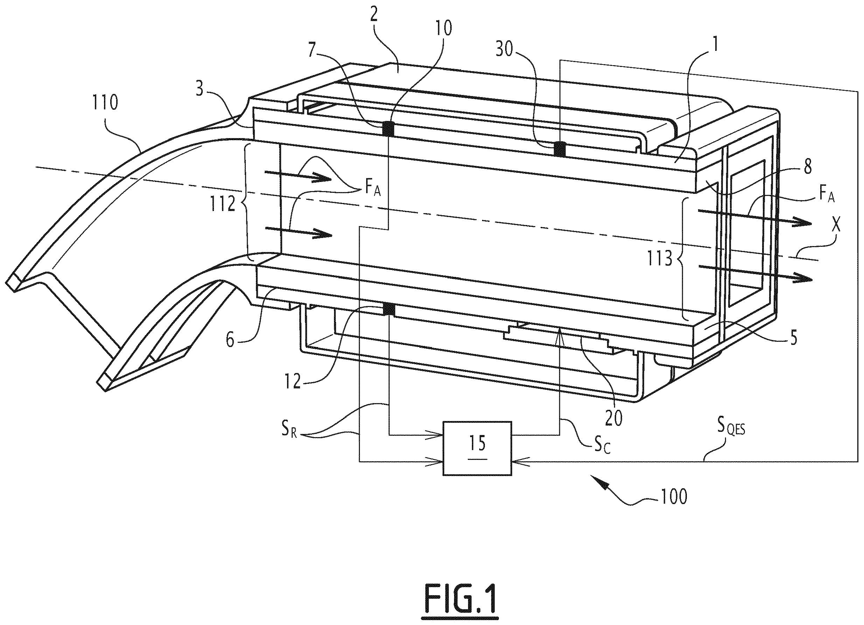

Fig. 1 - 3 are schematic illustrations of a possible embodiment of an apparatus according to the invention, referred to as a whole by the reference numeral 100 in fig. 1, which is suited to actively reduce the noise produced by an air moving or conditioning device.

As previously indicated , this invention is particularly suited to the reduction of the noise generated by an HVAC system on board a motor vehicle, and will be described herein by reference to this application.

Such systems, commonly known by the abbreviation 'HVAC' (Heating, Ventilation, and Air Conditioning) are of the type known from the prior art or easily realizable by a person skilled in the art, and therefore will not be described in detail.

In the following and in the claims appended hereto, such a system will be referred to for simplicity as an 'HVAC system'; as defined herein, any system suited to treat or condition, e.g. heat, cool, or simply force, air flows for circulation within a vehicle, e.g. in the passenger compartment of an automobile, is to be intended as included within this definition.

For the sake of simplicity, fig. 1 - 3 show only one conduit 110 of an HVAC system, which, in an automobile, is arranged for example between the two front seats, and is suited to emit air flows F_{A} through an outlet section 113 towards the back seats of the passenger compartment.

In the example shown, the conduit 110 has a double duct and related double outlets to move the air flows towards the rear of the passenger compartment over two separate routes; in the following, for the sake of simplicity, the apparatus 100 will be illustrated by reference to only one of the two duct routes shown, but the description should be considered equally applicable to the other route, as well as to any other route that may be present on board the vehicle in which the apparatus 100 is used.

Advantageously, the apparatus 100 according to the invention comprises at least one conduit 1 having a first end 3 that is operatively linked, e.g. connected, to a section of the HVAC system from which air flows F_{A} are emitted for circulation within the vehicle.

In the example shown, the first end 3 is connected to the outlet section 112 of a connecting conduit 110.

Clearly, depending on applications, the connecting duct 100 may not be present, or may be configured differently, and/or the conduit may be simply arranged near and facing the air moving or conditioning device, e.g. a fan or an impeller.

In the exemplary embodiment shown, the conduit 1 extends longitudinally and in a substantially rectilinear fashion along a reference axis X from the first end 3 up to a second free end 5 that is opposite the first end 3, from which the air flows FA exit towards the passenger compartment.

In the exemplary embodiments shown, the conduit 1 has for instance a rectangular cross section; of course, depending on the requirements of the specific application, the conduit 1 may have a different shape and dimensions, e.g. circular, elliptical, non-rectilinear in course, etc.

The apparatus 100 further comprises:
- an electronic control unit arranged outside the conduit 1, schematically represented by the reference numeral 15 only in fig. 1 for the sake of simplicity;
- at least one noise sensor or reference sensor, schematically represented in the drawings by the reference numeral 10, which is arranged along the conduit 1, e.g. near the first end 3;
- at least one sound source, schematically represented in the drawings by the reference numeral 20, which is positioned along the conduit 1 and spaced apart from the at least one noise sensor 10. For example, relative to the direction of the air flows F_{A}, the sound source 20 is arranged downstream of the noise sensor 10, e.g. near the second end 5.

In particular, the at least one noise sensor 10 is configured to detect the noise level generated by the HVAC system 110 and in particular the noise level in a first position within the conduit 1, e.g. towards the HVAC system due to the air flows F_{A} fed by it into the conduit, and to provide one or more signals S_{R} indicative of the noise level detected in the first position in input to the electronic control unit 15.

The apparatus 100 according to the invention advantageously further comprises an additional noise sensor or correction sensor for the noise detected by the at least one noise sensor 10, which is indicated in the drawings by the reference numeral 30 and is arranged along the conduit 1 downstream of the at least one noise sensor 10 in the direction of the air flows F_{A} flowing along the conduit 1 itself.

This additional sensor 30 is configured to detect a second noise level or residual noise level present in the conduit 1 in a second position downstream of the first position, and to send to the electronic control unit 15 one or more corresponding signals S_{RES} indicative of the residual noise level detected.

In particular, the additional noise sensor 30 and the sound source 20 are arranged along the conduit 1, preferably on opposite sides to one another relative to the longitudinal reference axis X of the conduit 1, e.g. both corresponding to the same cross section of the conduit 1 near the second end 5.

Usefully, in its turn, the electronic control unit 15 is configured to generate, at least on the basis of the one or more signals indicative of the first noise level detected by the at least one noise sensor 10 and of the one or more signals S_{RES} indicative of the residual noise level detected by the additional sensor 30, one or more sets of digital filters suitable for being applied to the sound source 20 by means of the control signals Sc, in order to drive it to emit sound waves adapted to reduce, at least partially, the residual noise level detected by the additional sensor 30 while the various air flows F_{A} pass along the conduit 1.

The set of digital filters may be generated by modifying one or more previously generated digital filters or being newly generated sets.

In practice, the additional noise sensor 30 detects the residual noise associated with the air flows FA that have passed through the conduit 1 and that are about to exit it into the passenger compartment, providing also that information to the electronic control unit 15.

For its part, the electronic control unit 15 continuously and adaptively corrects the driving of the sound source 20 such that the sound waves emitted by it reduce more and more the noise associated with the air flows F_{A} passing through and that would otherwise be transmitted into the passenger compartment in whole or at least in part.

The control unit 15 may consist of or comprise any device available on the market having a processor, DSP, microcontroller, or a similar device, optionally configured, to the extent necessary, with electronic means and/or software algorithms to the extent necessary to carry out the intended functions of the unit in the context of this invention.

Additionally, the unit 15 may be an electronic unit specifically devised for the intended functionalities of the apparatus 100 according to the invention, or it may be associated with or integral with an electronic unit already present on board the vehicle to provide other functionalities.

Usefully, in one possible embodiment of the apparatus 100 according to the invention, there is used only a single electronic control unit 15 for actively controlling the noise in each of the conduits 1 present; alternatively, depending on the requirements of the specific application, two or more electronic control units 15 may be used.

In one possible embodiment, the sound source 20 comprises or consists of one or more speakers.

The or each speaker 20 may consist of a speaker known from the prior art.

In this case, as shown in figures 1 - 2, the apparatus 100 comprises an enclosure 2 which is positioned around the conduit 1 (or more conduits 1 as shown in the example of fig. 1 - 2) and is suitably configured such that between the outer walls of the conduit 1 and the enclosure 2 there is defined a volume of air adequate to allow the proper functioning of the sound source.

Alternatively or additionally, it is possible to use one or more acoustic shaker or exciter devices as a sound source, known as "shakers" or" "exciters"; in this case, the enclosure 2 may be omitted, and the apparatus 100 may comprise a panel or an equivalent vibrating element (not shown) to which the shaker is connected to cause it to vibrate and generate the desired corrective waves.

In one possible embodiment, in turn, the noise sensor 10 comprises or consists of at least one microphone.

As is well known and thus not shown in detail, the microphone 10 comprises a microphone capsule that constitutes the sound-sensitive part, and is for example of a type known per se.

In one possible embodiment, the further noise sensor 30 also comprises or consists of at least one microphone; in particular, the noise sensor 10 and the further noise sensor 30 may be identical or of substantially the same type.

In one possible embodiment, the noise sensor 10, in particular the microphone capsule of the microphone 10, is arranged within a seat 7 provided along the conduit 1.

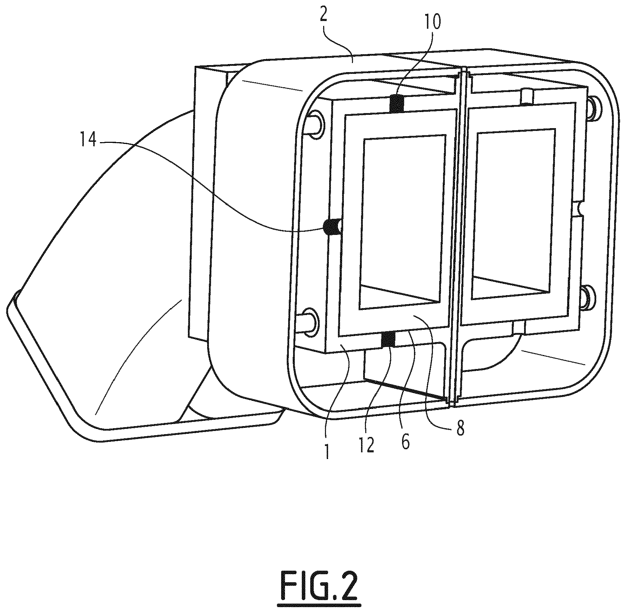

In particular, in the embodiment shown in figures 1 and 2, the seat 7 is sort of recess in the thickness of the side wall of the conduit 1, e.g. over the entire thickness thereof.

In this case, the noise sensor 10, in particular the capsule of the microphone 10, is arranged with a front surface, i.e. the sound-sensitive part, facing the internal cavity of the conduit 1, substantially aligned with the inner surface 6 of the side wall itself.

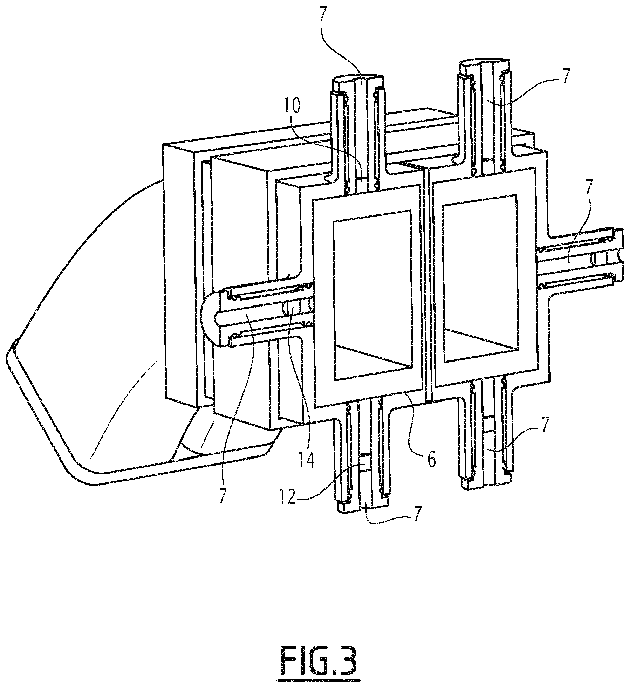

In the embodiment shown in figure 3, the seat 7 extends transversely relative to the longitudinal extension of the conduit 1 itself from the side wall of the conduit 1, along the reference axis X, away from the wall itself and the seat 7, and takes the form of a true side cavity.

In this case, the sensor 10 is contained within the inner cavity 7 and at a certain distance from the inner surface of the conduit 1; in this way, any adverse effects on the readings of the noise sensor 10 caused by the presence of turbulence along the conduit 1 are at least partially reduced.

Analogously, the above description of the reference sensor 10 and its position within the seat 7 applies equally to the additional sensor 30, which may also be arranged in the recess 7 with the front surface of its microphone capsule aligned with the inner surface 6 of the conduit 1, or arranged at a distance from the inner surface 6 and contained within the cavity 7.

In one possible embodiment, for example as shown in figure 1, the at least one noise sensor 10 comprises at least one first noise sensor 10 previously described and a second noise sensor 12 or second reference sensor.

The two sensors 10, 12 are spaced apart, and, in particular, are arranged on opposite sides relative to the reference axis X of the conduit 1, at a cross section of the conduit 1, for instance near the first end 3.

In another possible embodiment, as shown for example in figures 2 and 3, there is usefully provided also a third noise sensor 14 or third reference sensor; for example, the third noise sensor 14 is positioned at the same cross section of the conduit 1 in which the first and second sensors 10, 12 are positioned, and is arranged substantially equidistantly between them.

When the second sensor 12, and optionally the third sensor 14, are used, the electronic control unit 15 receives corresponding signals S_{R} at its input that are analogous to those received from the first sensor 10, and generates the corresponding control signals Sc based on all signals received in input.

In this way, the presence of more reference sensors, in particular together with the additional correction sensor 30, makes it possible to improve the effectiveness of the apparatus 100.

Analogously to the first sensor 10, the second sensor 12 and the third sensor 14 each comprise or consist of at least one corresponding microphone, and the foregoing description of the position of the first sensor 10 in the seat 7 is also applicable to the sensors 12, 14.

For example, the sensors 10, 12, and 14 may be identical or of a type substantially similar to each other.

In particular, depending on the specific application, for instance the configuration and acoustic characteristics of the conduit 1, it is possible to position the various sensors 10, 12, 14 within the respective seats 7 in different positions, e.g. one or more spaced apart from the inner surface 6, and at different distances from one another, with the other(s) aligned with the surface itself, as shown for example in fig. 3.

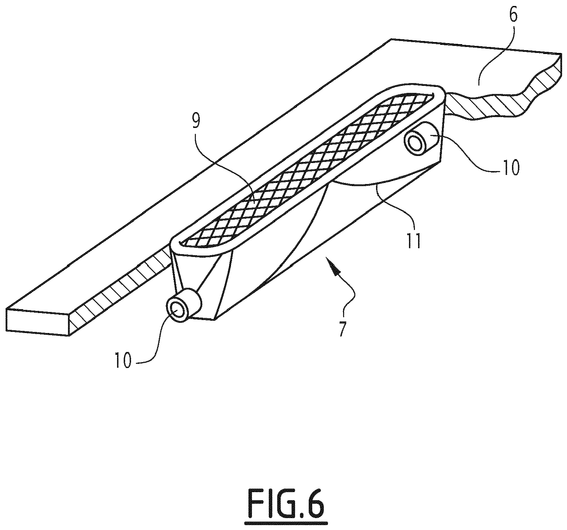

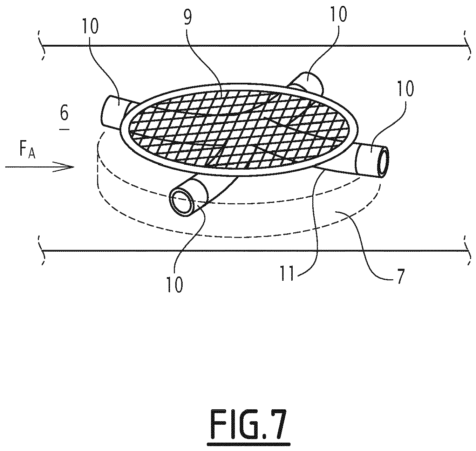

Moreover, the or each sensor 10, 12, 14, as well as the additional sensor 30, may comprise or consist of a microphone array, i.e. comprise at least a plurality of microphone capsules 10, for example two as shown schematically in fig. 6, or more, for example four as shown schematically in fig. 7.

Moreover, in one possible embodiment, the apparatus 100 according to the invention advantageously comprises first means configured to limit turbulence in the air flows F_{A} within the/each seat 7.

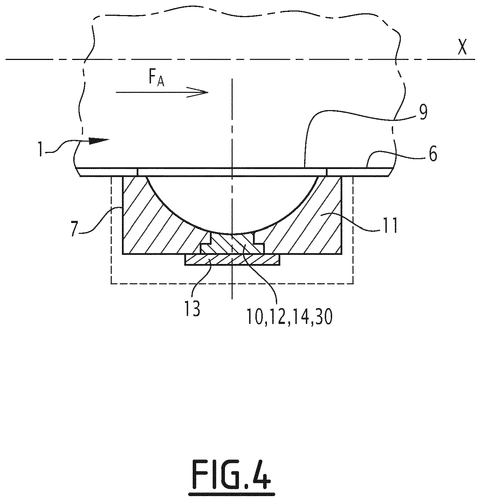

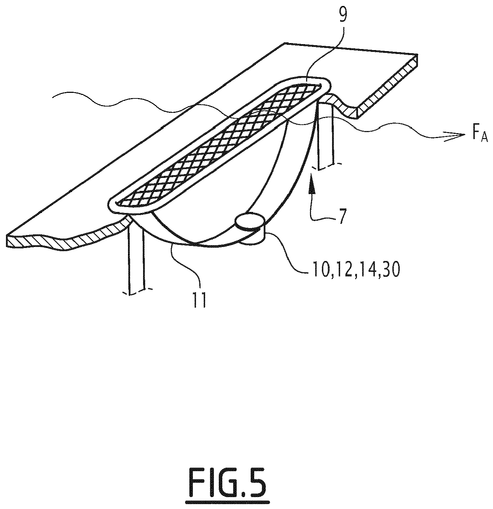

In one possible embodiment shown in fig. 4 - 7, the first means comprise a wire mesh 9, preferably having a tight weave, which is applied along and substantially aligned with the inner surface 6 of the conduit 1 corresponding to each of the seats 7 in which the respective noise sensors 10, 30 and 12, 14 (when present) are contained.

According to this embodiment, the wire mesh 9 has a geometric shape geometrically conjugated with that of the entrance of the seats 7, and may be for example circular or rectangular; moreover, in this embodiment, the microphone capsule or array of microphone capsules of each sensor 10, 30, 12, 14 are mounted at a distance from the respective wire mesh 9, for example on a suitable mounting bracket, schematically indicated by the reference numeral 11 in fig. 4 - 7.

In one possible embodiment, the mounting bracket 11 is inserted into the seat 7.

Optionally, the mounting may be carried out using also sealing elements, for example a gasket, schematically illustrated by the reference numeral 13 only in figure 4 for the sake of simplicity.

In one possible embodiment, the apparatus 100 comprises second means configured to limit any turbulence in the air flows F_{A} within the conduit 1.

These second means are configured to cover or be arranged along at least part of the inner surface 6 of the conduit 1 itself.

In particular, in one possible embodiment shown in figures 1 - 3, the second means comprise a coating layer 8 that at least partially, preferably completely, coats the inner walls of the conduit 1.

For example, this layer 8 consists of or comprises a layer of open-cell material, e.g. a melamine-resin foam.

It has been found in practice that the apparatus 100 according to the invention is able to attain the aforementioned objective by effectively and actively reducing the noise generated by air moving or conditioning devices, in particular HVAC systems on board a vehicle, preventing the diffusion of noise at its original level in an area occupied by people, for example in the passenger compartment of a motor vehicle,.

Moreover, such results are obtained by means of an easily implemented solution with relatively low costs that may be easily adapted to be connected to any part of such an HVAC device or system or, in general, by any type of air conditioning system installed on board a vehicle.

Naturally, without prejudice to the scope of the invention, many variations and implementation details thereof may be applied to the above-described exemplary and non-limiting embodiments, without departing from the scope of protection of the invention as defined in the accompanying claims and include a combination, even partial, of the embodiments illustrated. For example, the first and second means 8, 9, such as the wire mesh 9 and the coating layer 8, may be used together or not; the coating layer 8 may be made of a material other than that above indicated by way of example; the various noise sensors may be different to one another and/or of a different type, e.g. one or more noise sensors may be provided using accelerometers, etc.

## Claims

1. Apparatus (100) for reducing noise generated by an air moving or air conditioning device, **characterized in that** it comprises at least:
- at least one duct (1) having a first end (3) operatively connected to a section (112) of the device (110) from which air streams (F_{A}) to be circulated come from;
- - an electronic control unit (15);
- at least one noise sensor (10) that is arranged along the duct (1) and is configured to detect noise due to air streams (F_{A}) injected within the duct (1) and provide in input to said electronic control unit (15) one or more signals (S_{R}) indicative of a first noise level detected at a first position along the duct (1);
- at least one sound source (20) positioned along the conduit (1) spaced from said at least one noise sensor (10);
- and at least one further noise sensor (30) placed along the duct (1) downstream of the at least one noise sensor (10) with respect to the direction of said air flows (F_{A}), said further noise sensor (30) being configured to detect the level of residual noise present in the duct (1) at a second position and send to the electronic control unit (15) one or more corresponding signals (S_{RES}) indicative of the level of residual noise detected, and wherein said electronic control unit (15) is configured to generate, based on said one or more signals (S_{R}) indicative of the first noise level detected by said at least one noise sensor (10) and said one or more corresponding signals (S_{RES}) indicative of the level of residual noise detected by said at least one further noise sensor (30), one or more command signals (Sc) suitable for driving said at least one sound source (20) so as to emit sound waves within the duct (1) suitable for reducing, at least partially, the level of residual noise detected.

2. Apparatus (100) according to claim 1, wherein said electronic control unit (15) is configured to generate, at least on the basis of said one or more signals (S_{R}) indicative of the detected first noise level and said one or more corresponding signals (S_{RES}) indicative of the level of residual noise detected, one or more sets of digital filters suitable for being applied to said sound source (20) to drive it to emit said sound waves.

3. Apparatus (100) according to one or more of the preceding claims, wherein at least one of said at least one noise sensor (10) and further noise sensor (30) is housed within a housing seat (7) which is provided along said conduit (1), with a front surface thereof substantially aligned with the inner surface (8) of said conduit (1).

4. Apparatus (100) according to one or more of claims 1 to 2, wherein said at least one of said at least one noise sensor (10) and further noise sensor (30) is housed within a housing seat (7) defined along said conduit (1) and extending transversely with respect to the extension of said conduit (1) along a longitudinal reference axis (X), with a front surface thereof spaced from the inner surface (8) of said conduit (1).

5. Apparatus (100) according to one or more of the preceding claims, further comprising first means (9) configured to limit turbulence of air flows (FA) within the housing (7) of said at least one among said at least one noise sensor (10) and further noise sensor (30).

6. Apparatus (100) according to claim 5, wherein said first means (9) configured to limit turbulence of air flows (FA) within the housing seat (7) comprise one or more wire meshes (9) that are applied along and substantially aligned with the inner surface (6) of the duct (1), each wire mesh (9) being disposed at the entrance of an associated housing seat (7).

7. Apparatus (100) according to one or more of the preceding claims, comprising second means (8) configured to limit turbulence of air flows (F_{A}) within the duct (1), said second means (8) being configured to cover or be arranged along at least a portion of the inner surface (6) of said duct (1).

8. Apparatus (100) according to claim 7, wherein said second means (8) configured to limit airflow turbulence (F_{A}) within the duct (1) comprise at least one layer (9) of open cells material.

9. Apparatus (100) according to one or more of the preceding claims, wherein said sound source (20) comprises or consists of a loudspeaker, and wherein the apparatus (100) further comprises an enclosure (2) which is arranged around the at least one duct (1) and is configured such that between the outer walls of the duct (1) and the enclosure (2) itself there is defined a volume of air adequate to allow operation of the sound source (20).

10. Vehicle comprising an HVAC system (110) for circulating flows of conditioned air within the vehicle, **characterized in that** it comprises at least one apparatus (100) according to one or more of the preceding claims, said conduit (1) of the apparatus (100) having a first end (3) connected to a section (112) of the HVAC system (110) from which said air flows (FA) to be circulated in the vehicle come from.
